Europäisches Patentamt

European Patent Office

Office européen des brevets

(19)

(11) Veröffentlichungsnummer : **0 396 965 B1**

(12) **EUROPÄISCHE PATENTSCHRIFT**

(45) Veröffentlichungstag der Patentschrift :
25.11.92 Patentblatt 92/48

(21) Anmeldenummer : **90107912.9**

(22) Anmeldetag : **26.04.90**

(51) Int. Cl.⁵ : **E04C 2/36**

(54) **Sandwichbauteil.**

(30) Priorität : **10.05.89 DE 3915249**

(43) Veröffentlichungstag der Anmeldung :
**14.11.90 Patentblatt 90/46**

(45) Bekanntmachung des Hinweises auf die
Patenterteilung :
**25.11.92 Patentblatt 92/48**

(84) Benannte Vertragsstaaten :
**DE ES FR GB IT NL**

(56) Entgegenhaltungen :
**DE-A- 2 363 155**
**FR-A- 1 318 714**

(73) Patentinhaber : **DORNIER GMBH**
**Postfach 1420**
**W-7990 Friedrichshafen 1 (DE)**

(72) Erfinder : **Helwig, Gunter, Dipl.-Ing.**
**Säntisblick**
**W-7758 Daisendorf (DE)**

(74) Vertreter : **Landsmann, Ralf, Dipl.-Ing.**
**DORNIER GMBH - Patentabteilung - Kleeweg
3**
**W-7990 Friedrichshafen 1 (DE)**

## Beschreibung

Die Erfindung bezieht sich auf ein Sandwichbauteil gemäß dem Oberbegriff des Anspruchs.

Die bisher bei der Herstellung von Leichtbau-Verbundstrukturen (Sandwichbauteilen) verwendeten wabenförmigen Kerne weisen räumlich anisotrope mechanische Kennwerte auf. Dies wird hervorgerufen durch das Herstellverfahren, bei dem ein Stapel aus Schichten des Stegmaterials (Papier, Kunststoffgewebe etc.), das an vorgestimmten Stellen in streifenförmigen Bereichen miteinander verklebt ist, zusammengelegt, anschließend zu einem Wabenblock auseinandergezogen und dann mit einem aushärtbaren Kunststoff imprägniert wird.
Die in den verklebten streifenförmigen Bereichen doppelte Wandstärke führt zu der oben genannten Anisotropie der Wabenkerne.

Aus der **DE-A 23 63 155** ist ein Sandwichbauteil mit einem wabenförmigen Kern aus faserverstärktem Kunststoff bekannt, der aus übereinander gelegten Rovingbündeln gebildet ist. Die Wandstärken in den Stegen sind gleich. Da die Wabenkerne viereckig sind und die Lagen in den Stegen unidirektional sind (Bündel), resultiert keine ausreichende Isotropie des Gesamtbauteils.

Eine andere Bauweise (**FR-A 1 318 714**), bei der vorimprägnierte Gewebe abwechselnd mit Formstäben geschichtet, gepreßt und ausgehärtet werden, hat ebenfalls den entscheidenden Nachteil der unterschiedlichen Wandstärke durch Doppelungen dort, wo die einzelnen Schichten miteinander verklebt sind.
Beim Einsatz solcher Kerne in hochgenauen Verbundbauteilen führt dies bei wechselnden Temperaturen zu ungleichmäßigen Verformungen, die z.B. für die Leistungsfähigkeit von Antennenreflektoren sehr nachteilig sind. Zur Erzielung von Verzugsfreiheit und optimalen Leichtbaueigenschaften ist es notwendig, einen wabenförmigen Kern mit räumlich quasi-isotropen thermischen Ausdehnungsverhalten bei gleichzeitigen quasi-isotropen mechanischem Verhalten in der Ebene senkrecht zu den Wabenstegen zu verwenden.

Der Erfindung liegt die Aufgabe zugrunde, einen Wabenkern mit den genannten geforderten Eigenschaften für Sandwichbauteile vorzuschlagen. Diese Aufgabe wird von einem Bauteil mit den Merkmalen des Patentanspruchs gelöst.

Die Erfindung wird mit zwei Figuren näher erläutert.

Fig. 1 zeigt den Kern eines erfindungsgemäßen Bauteils,

Fig. 2 zeigt den schematischen Herstellungsablauf.

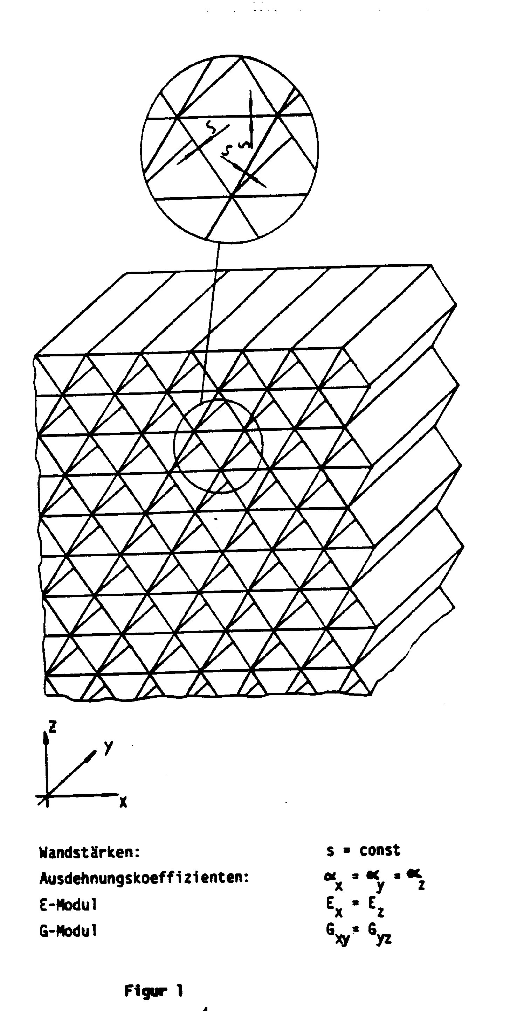

Fig. 1 zeigt einen erfindungsgemäß aufgebauten Wabenkern und eine Vergrößerung daraus.

Das wesentliche Merkmal in Fig. 1 ist die in den Stegen überall gleiche Wandstärke **S**, was in Verbindung mit einem quasi-isotropen, symmetrischen Aufbau des Laminates innerhalb der Stege zur Erzielung der gewünschten Eigenschaften führt. Da keine Doppelungen auftreten, kann die gewünschte Isotropie erreicht werden. Die Stege bestehen aus unterschiedlich orientierten Lagen, so daß eine Isotropie resultiert. Zum Erreichen minimalen Gewichts reichen minimal drei unterschiedlich orientierte Lagen.

Neben der hier gezeigten Ausführung mit dreieckigen Wabenzellen können auch sechseckige Formenquerschnitte Anwendung finden.

Bezüglich der Materialien können alle bekannten Fasern, wie z.B. Kohlefasern, Aramidfasern, Keramikfasern oder Glasfasern eingesetzt werden, wodurch sich zwar der Absolutwert des Wärmeausdehnungskoeffizienten ändert, aber nicht die Isotropie, was der Kernpunkt der Erfindung ist.

Ähnlich ist der Sachverhalt bei der Auswahl der Matrixsysteme (Harzsysteme). Hier können sowohl duroplastische Harze (z.B. Epoxid- oder Polyesterharze) verwendet werden, als auch Thermoplaste, welche eine nachträgliche Verformung des gesamten Wabenkernes erlauben, sowie Keramiken.

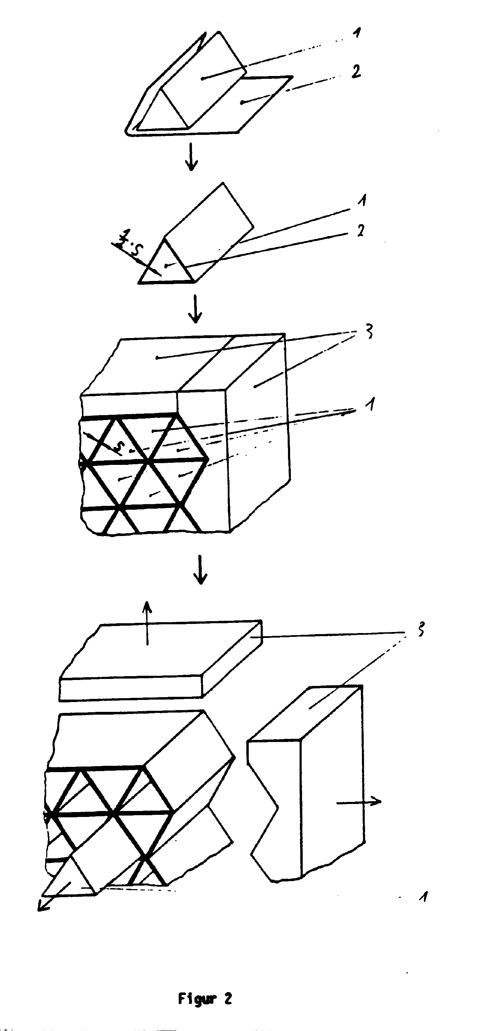

Fig. 2 zeigt ein erfindungsgemäßes Herstellungsverfahren. Zur Herstellung des Wabenkerns des erfindungsgemäßen Bauteils werden zunächst die Formkerne **1** und Randleisten **3** mit einem Trennmittel beschichtet. Anschliessend wird auf den Kernen **1** und den den Kernen zugewandten Seiten der Randleisten **3** jeweils eine Schicht bestehend aus mehreren Einzellagen eines mit aushärtbarem Kunststoff imprägniertem Fasermaterial **2** (Prepreg) abgelegt. Diese Schicht mit halber Stegdicke ist bezüglich der Faserrichtung der Einzellagen so aufgebaut, daß sich am fertigen Bauteil über die Stegdicke **S** ein symmetrisches quasi-isotropes Laminat ergibt. Die Belegung kann von Hand oder automatisiert erfolgen. Die belegten Formkerne **1** werden zu einem Stapel aufgeschichtet, wobei überall gleiche Wandstärken entstehen. Nach Erreichen der vorbestimmten Bauteilgröße werden die Ränder mit den Randleisten **3** abgeschlossen. Der Stapel wird nun senkrecht zu den Kernachsen gepreßt und das Laminat bei erhöhter Temperatur oder Raumtemperatur (abhängig von verwendetem Harztyp) ausgehärtet. Nach Beendigung der Aushärtung werden die Randleisten **3** entfernt und die Formkerne **1** aus dem Bauteil herausgezogen.

Möglich ist auch die separate Fertigung der Einzelzellen, wie oben beschrieben, mit anschließender Verklebung der Einzelzellen zum Wabenkern. Dies ist zwar ein etwas aufwendigerer Weg, der aber bei bestimmten Anwendungen z.B. bei sehr großen Wabenblöcken zu bevorzugen ist.

## Patentansprüche

1. Sandwichbauteil mit einem wabenförmigen Kern mit dreieckigem oder sechseckigem Kernquerschnitt aus faserverstärktem Kunststoff, **dadurch gekennzeichnet**, daß die Stege überall gleiche Wandstärken haben (keine Dopplungen) und daß die Stege aus mindestens drei unterschiedlich orientierten Laminatlagen aufgebaut sind.

## Claims

1. Sandwich component having a honeycombed core with a triangular or hexagonal cross-section of fibre-reinforced plastics material, characterised in that the webs all have the same wall thickness (no doublings), and in that the webs are constructed from at least three laminate layers oriented in different directions.

## Revendications

1. Panneau sandwich comportant un noyau alvéolaire à section de noyau triangulaire ou hexagonale, en matière plastique renforcée de fibres, caractérisé par le fait que les nervures possèdent partout la même épaisseur de paroi (aucun doublage) et que les nervures sont constituées d'au moins trois couches de stratifié d'orientations différentes.

| Wandstärken: | $s = const$ |
| --- | --- |
| Ausdehnungskoeffizienten: | $\alpha_x = \alpha_y = \alpha_z$ |
| E-Modul | $E_x = E_z$ |
| G-Modul | $G_{xy} = G_{yz}$ |

Figur 1

4

Figur 2